(19) Europäisches Patentamt
European Patent Office
Office européen des brevets

(11) EP 2 271 698 B1

(12) **EUROPÄISCHE PATENTSCHRIFT**

(45) Veröffentlichungstag und Bekanntmachung des Hinweises auf die Patenterteilung:
**23.11.2016 Patentblatt 2016/47**

(21) Anmeldenummer: **09737967.1**

(22) Anmeldetag: **02.04.2009**

(51) Int Cl.:
***C08G 73/02*** *(2006.01)*

(86) Internationale Anmeldenummer:
**PCT/EP2009/053917**

(87) Internationale Veröffentlichungsnummer:
**WO 2009/132923 (05.11.2009 Gazette 2009/45)**

(54) **KONTINUIERLICHES VERFAHREN ZUR HERSTELLUNG EINES REAKTIVPOLYMERS**

CONTINUOUS PROCESS FOR PRODUCING A REACTIVE POLYMER

PROCÉDÉ DE PRODUCTION EN CONTINU D'UN POLYMÈRE RÉACTIF

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **30.04.2008 DE 102008001470**

(43) Veröffentlichungstag der Anmeldung:
**12.01.2011 Patentblatt 2011/02**

(73) Patentinhaber: **Evonik Degussa GmbH**
**45128 Essen (DE)**

(72) Erfinder:
- **OMEIS, Marianne**
  **46286 Dorsten (DE)**
- **WEIHRAUCH, Thomas**
  **48249 Dülmen (DE)**
- **HERDA, Silvia**
  **44623 Herne (DE)**

(56) Entgegenhaltungen:
**EP-A- 1 964 663** **DE-A1- 19 842 152**
**US-A- 4 806 267**

Bemerkungen:
Die Akte enthält technische Angaben, die nach dem Eingang der Anmeldung eingereicht wurden und die nicht in dieser Patentschrift enthalten sind.

EP 2 271 698 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung beschreibt ein Reaktivpolymer, ein kontinuierliches Verfahren zu seiner Herstellung und die Verwendung dieses Reaktivpolymers zur Herstellung von Werkstoffen.

E. A. Boulter et al. beschreiben in Electrical Insulation Conference, 1997, and Electrical Manufacturing & Coil Winding Conference Proceedings, Band 22-25 (September 1997), Seiten 249 - 253 die Eigenschaften oxazolin-modifizierter Phenolharze, wie beispielsweise die Haftung auf Kohlefasern, Glasfasern und Metallen, die Beständigkeit gegenüber thermooxidativem Abbau, die geringe Rauchentwicklung bei einem Brand, die geringe Entflammbarkeit und die hohe Schlagzähigkeit. Besonders wegen der geringen Entflammbarkeit eigen sich diese Polymere zur Herstellung von Bauteilen für die Flugzeugindustrie. Weitere Anwendungen sind im Bereich der elektrischen Isolierung und im Elektronikbereich zu finden. Gemäß E. A. Boulter eignen sich diese Precursor bzw. Prepolymere unter anderem auch für Spritzguss, Resin Transfer Moulding (RTM) und Prepregs.

Ein Batch-Verfahren zur Herstellung von oxazolin-modifizierter Phenolharze beschreiben Tiba et al. in US 4,699,970. Hierbei werden Oxazoline und Phenolharzen in Gegenwart von Phosphiten als Katalysatoren umgesetzt und anschließend gehärtet. Den Einsatz von Phosphinen als Katalysatoren beschreiben Goel et al. in der EP 0 284 880 A2.

Ein weiteres Batch-Verfahren zur Herstellung von oxazolin-modifizierten Phenolharzen beschreiben Culbertson et al. in US 5,302,687. Als Katalysatoren werden hierbei Tetraalkyl- bzw. Tetraarylammoniumsalze und -phosphoniumsalze beschrieben, wobei als Cokatalysatoren Alkylhalogenide eingesetzt werden.

Ebenfalls Culbertson et al. beschreiben in der US 4,806,267 ein Verfahren zur Herstellung einer niedrig schmelzenden Mischung (einem Schmelzpunkt von kleiner 100°C) bestehend aus aromatischen Bisoxazolinen und Bisoxazinen, wobei die Struktureinheit der Oxazoline oder Oxazine in einem Molekül enthalten ist. In der US 5,644,006 beschreiben Deviney et al. die Umsetzung eines Phenolharzes mit modifizierten Bisoxazolinen.

In Prog. Polym. Sci. 27 (2002) 579 - 626 beschreibt Culbertson die schrittweise Polymerisation von cyclischen Iminoethern, u.a. auch die Umsetzung von Oxazolinen mit Phenol-haltigen Verbindungen. Auch hier wird ein Batch-Verfahren beschrieben.

Die Eigenschaften von Polymeren hergestellt aus Bisoxazolinen und Phenolharzen beschreibt die Publikation Mat. Tech. 11.6:215-229.

Die EP 0 758 351 B1 beschreibt eine durch Energie polymerisierbare Zusammensetzungen, Homopolymere und Copolymere aus Oxazolinen, die als Initiator eine organometallische Verbindungen aufweisen. Diese Zusammensetzungen können vorzugsweise phenolische Verbindungen mit zwei oder mehr phenolischen Hydroxygruppen aufweisen.

Deviney et al. beschreiben in der US 5,616,659 ein mit Bisoxazolinen vernetzter Novolak, wobei Phosphorsäureestergruppen an die Polymerkette angebunden sind, um den Flammschutz des Polymers zu verbessern.

Um die thermooxidative Stabilität zu erhöhen, beschreiben Deviney et al. in der WO 98/05699 die Herstellung eines Polymers aus einem Phenolharz und Bisoxazolinen in Abwesenheit eines Katalysators. Um eine gleichmäßige Energiezufuhr in der Zusammensetzung aus Phenolharz und Bisoxazolin zu erzielen, wird die Zusammensetzung einem elektromagnetischen Feld ausgesetzt.

Der Stand der Technik beschreibt Verfahren zur Herstellung von Reaktivpolymeren basierend auf Oxazolinen bzw. Oxazinen und Phenolharzen in einem Batch-Verfahren, insbesondere werden Verfahren im Labormaßstab beschrieben. Um das gewünschte polymere Produkt aus Bisoxazolinen und Phenolharz bei technischen relevanten Produktionsmengen aus dem Reaktor ablassen zu können, kann die Temperatur im Reaktor erhöht werden oder es wird ein geeignetes Lösemittel hinzugefügt. Diese Vorgehensweise ist häufig notwendig, da das Reaktionsprodukt aus Oxazolinen bzw. Oxazinen und Phenolharzen eine hohe Viskosität aufweisen kann. Die Temperaturerhöhung kann jedoch bei technischen relevanten Produktionsmengen zu einer teilweisen Polymerisation des Phenolharzes führen.

Es war daher die Aufgabe der vorliegenden Erfindung, ein kontinuierliches Verfahren zur Herstellung von Reaktivpolymeren basierend auf Oxazolinen und Phenolharz zu ermöglichen.

Überraschenderweise wurde ein kontinuierliches Verfahren zur Herstellung von Reaktivpolymeren gefunden, das sich dadurch auszeichnet, dass das Reaktivpolymer mittels eines Extruders durch Umsetzung von einer Mischung (A) bestehend aus Verbindungen gemäß der Struktur (A1) und/oder Verbindungen gemäß der Struktur (A2) mit Phenolharzen (B) hergestellt wird. Nach dem Tempern des auf diese Weise hergestellten Reaktivpolymers erhält man Polymere, die eine Glastemperatur von über 190°C aufweisen können. Ferner ermöglicht dieses erfindungsgemäße Verfahren ein kontinuierliches Verfahren zur Herstellung von diesen Reaktivpolymeren in gleichbleibender Produktqualität.

Gegenstand der Erfindung ist somit ein Verfahren zur kontinuierlichen Herstellung von Reaktivpolymeren durch Umsetzung von einer Mischung (A) umfassend

eine oder mehrere Verbindungen gemäß der Struktur (A1)

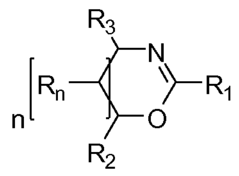

(A1)

mit $R_1$ = Alkyl- oder Phenylgruppe,
$R_2$, $R_3$, $R_n$ = Wasserstoff, Alkylgruppe,
n = 0, 1, 2, 3,

oder
eine oder mehrere Verbindungen gemäß der Struktur (A2)

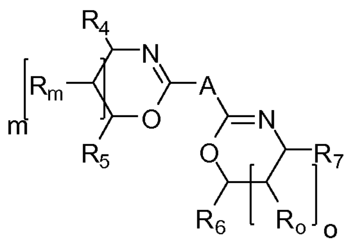

(A2)

mit A = Alkylen oder Phenylen,
$R_4$, $R_5$, $R_6$, $R_7$,$R_m$,$R_o$ = Wasserstoff, Alkylgruppe,
m, o = 0, 1, 2, 3,

oder Mischungen aus einer oder mehreren Verbindungen gemäß der Struktur (A1) und (A2), wobei die Substituenten vom Typ $R_1$, $R_2$, $R_3$, $R_4$, $R_5$, $R_6$, $R_7$, $R_n$, $R_m$ und $R_o$ gleich oder verschieden sowie substituiert oder unsubstituiert sein können, das Strukturfragment A substituiert oder unsubstituiert sein kann und m und o gleich oder verschieden sein kann,

mit Phenolharzen (B), das dadurch gekennzeichnet ist, dass die Umsetzung in einem Extruder, Strömungsrohr, Intensivkneter, Intensiv-Mischer oder statischen Mischer durch Durchmischung und kurzzeitiger Reaktion bei Wärmezufuhr und nachfolgende Isolierung des Endproduktes erfolgt, wobei die Verweilzeit der Einsatzstoffe in dem Extruder, Strömungsrohr, Intensivkneter, Intensiv-Mischer oder statischen Mischer von 3 Sekunden bis 15 Minuten beträgt und die Reaktanden bei Temperaturen von 150 °C bis 200 °C zur Reaktion gebracht werden, und anschließend eine schnelle Abkühlung erfolgt, wobei die Temperatur innerhalb von weniger als 60 Sekunden um mehr als 50 °C abnimmt.

Das Prinzip dieses erfindungsgemäßen Verfahrens besteht darin, dass die Umsetzung der Einsatzstoffe, wie beispielsweise die Mischung (A) und das Phenolharz (B) kontinuierlich in einem Extruder, Strömungsrohr, Intensiv-Kneter, Intensiv-Mischer oder statischen Mischer durch intensive Durchmischung und kurzzeitige Reaktion, vorzugsweise bei Wärmezufuhr erfolgt. Gegebenenfalls kann eine kontinuierliche Nachreaktion nachgeschaltet werden. Durch eine anschließende schnelle Abkühlung gelingt es dann, das Endprodukt zu erhalten. Schnelle Ankühlung im Sinne der vorliegenden Erfindung bedeutet, dass die Temperatur innerhalb von weniger als 60 Sekunden um mehr als 50 °C abnimmt. Die Schmelze wird beispielsweise mit einer Austrittstemperatur von 120°C über z. B. ein wasser- oder luftgekühltes Metallband abgefahren. Dieses Kühlband weist vorzugsweise eine Temperatur von 0 bis 23°C, bevorzugt Raumtemperatur auf. Die schnelle Abkühlung hat den Vorteil, dass dadurch Nachreaktionen in der Polymerschmelze unterbunden werden und außerdem eine Granulierung möglich ist.

Als Aggregate sind Extruder wie Ein- oder Mehrschneckenextruder, insbesondere Zweischneckenextruder, Planetwalzenextruder oder Ringextruder, Strömungsrohr, Intensiv-Kneter, Intensiv-Mischer, wie beispielsweise Turrax-Mischer, oder statische Mischer für das erfindungsgemäße Verfahren besonders geeignet und werden bevorzugt verwendet. In einer besonderen Ausführungsform des erfindungsgemäßen Verfahrens können auch Mehrwellenextruder, wie beispielsweise Ringextruder, eingesetzt werden. Besonders bevorzugt sind Mehrschneckenextruder, insbesondere Zweischneckenextruder, und Mehrwellenextruder, insbesondere Ringextruder. Ganz besonders bevorzugt sind Zweischneckenextruder.

Überraschend ist es, dass die Umsetzung, die im diskontinuierlichen Verfahren bis zu einer Stunde benötigt, in den vorab genannten Aggregaten, wie beispielsweise in einem Extruder oder Intensivkneter, in einigen Sekunden

abläuft. Die kurzzeitige thermische Belastung im Zusammenspiel mit der Mischwirkung des Extruders ist in dem erfindungsgemäßen Verfahren ausreichend, um die Reaktionspartner in dem gewünschten Grad vollständig oder weitestgehend umzusetzen. Die Extruder oder Intensivkneter ermöglichen durch geeignete Bestückung der Mischkammern bzw. Zusammenstellung der Schneckengeometrien intensive rasche Durchmischung bei gleichzeitigem intensivem Wärmeaustausch. Andererseits ist auch eine gleichmäßige Durchströmung in Längsrichtung mit möglichst einheitlicher Verweilzeit gewährleistet. Außerdem ist es vorteilhaft, wenn eine unterschiedliche Temperierung in den einzelnen Gerätegehäusen- oder abschnitten möglich ist.

Weitere Vorteile des erfindungsgemäßen Verfahrens sind neben der guten Durchmischung mittels des Extruders eine exakte Dosierung der Komponenten und die genaue Einstellbarkeit der Reaktionszeit. Auf diese Weise erhält man ein Reaktivpolymer, das sich deutlich einfacher aufarbeiten lässt als die Produkte gemäß dem Stand der Technik. Ferner handelt sich es bei dem erfindungsgemäßen Verfahren um einen wirtschaftlich attraktiven Prozess, unter anderem da es sich um ein kontinuierliches Verfahren handelt, bei dem die Verfahrensparameter genau definiert werden können. Ein Scale-Up-Prozess sollte sich daher- im Vergleich zu den Verfahren des Stands der Technik - relativ einfach gestalten.

Das mittels des erfindungsgemäßen Verfahrens hergestellte Reaktivpolymer lässt sich einfach zu einem technisch gut handhabenden Granulat verarbeiten, das sich ferner durch seine Homogenität auszeichnet. Weiterhin vorteilhaft ist die schnelle Härtung des erfindungsgemäßen Reaktivpolymers. Dieses Reaktivpolymer ist insbesondere geeignet für die Herstellung von Werkstoffen, die sich durch eine hohe Wärmeformbeständigkeit, einer Glastemperatur von über 190 °C und außerordentliche Impacteigenschaften auszeichnen. Das erfindungsgemäße Reaktivpolymer kann sowohl für die Herstellung von Commodity-Bauteilen als auch für die Herstellung von Hochleistungsfaserverbundwerkstoffen eingesetzt werden. So zeichnen sich die aus dem erfindungsgemäßen Reaktivpolymer hergestellten Werkstoffe durch ihre hohe Zähelastizität, ihren verbesserten elektrischen Eigenschaften und ihrer geringen bis keiner Freisetzung von Reaktionsprodukten, vor allem gegenüber den Werkstoffen aus Phenolharzen gemäß dem Stand der Technik aus. Ferner zeichnen sich diese Werkstoff durch ihre guten Eigenschaften hinsichtlich der internationalen "Fire, Smoke and Toxicity" (FST)-Vorschriften aus.

Die Einsatzstoffe werden den Aggregaten in der Regel in getrennten Produktströmen zudosiert. Bei mehr als zwei Produktströmen können diese auch gebündelt zugeführt werden. Hydroxygruppen-haltige amorphe und/oder kristalline Polymere können zu einem Produktstrom zusammengefasst werden. Es ist auch möglich, diesem Produktstrom zusätzlich Katalysatoren und/oder Additive, wie beispielsweise Verlaufmittel, Stabilisatoren, Flammschutzmittel, Entlüfter oder Haftvermittler, zuzufügen. Die Stoffströme können auch geteilt werden und so in unterschiedlichen Anteilen an verschiedenen Stellen den Aggregaten zugeführt werden. Auf diese Weise können gezielt Konzentrationsgradienten eingestellt werden, wodurch die Vollständigkeit der Reaktion herbeiführt werden kann. Die Eintrittsstelle der Produktströme kann in der Reihenfolge variable und zeitlich versetzt gehandhabt werden.

Zur Vorreaktion und/oder Vervollständigung der Reaktion können mehrere Aggregate auch kombiniert werden.

Die der Reaktion nachgeschalteten Abkühlung wird, wie vorab beschrieben, bevorzugt schnell durchgeführt und kann in dem Reaktionsteil integriert sein, in Form einer mehrgehäusigen Ausführungsform wie bei Extrudern oder Conterna-Maschinen. Eingesetzt werden können außerdem: Rohrbündel, Rohrschlangen, Kühlwalzen, Luftförderer und Transportbänder aus Metall.

Die Konfektionierung kann je nach Viskosität des das Aggregat oder die Nachreaktionszone verlassenden Reaktivpolymers zunächst durch weitere Abkühlung mittels entsprechender vorgenannter Gerätschaften auf eine geeignete Temperatur gebracht werden. Dann erfolgt vorzugsweise die Pastillierung oder aber eine Zerkleinerung in eine gewünschte Partikelgröße mittels Walzenbrecher, Stiftmühle, Hammermühle, Schuppwalzen oder Ähnlichem.

Intensive Durchmischung und kurzzeitige Reaktion bei Wärmezufuhr bedeutet, dass die Verweilzeit der Einsatzstoffe in den oben genannten Aggregaten üblicherweise 3 Sekunden bis 15 Minuten, bevorzugt 3 Sekunden bis 5 Minuten, besonders bevorzugt 5 bis 180 Sekunden beträgt. Die Reaktanden werden dabei bei Temperaturen von 150°C bis 200°C, ganz besonders bevorzugt von 170°C bis 190°C zur Reaktion gebracht. Je nach Art der Einsatzstoffe und der Endprodukte können diese Werte für Verweilzeit und Temperatur jedoch auch andere bevorzugte Bereiche einnehmen.

Wesentlicher Bestandteil des erfindungsgemäßen Reaktivpolymers sind die Verbindungen der Struktur (A1) und (A2), die entweder jeweils allein oder in Form einer Mischung eingesetzt werden können. Selbstverständlich können auch Mischungen unterschiedlicher Verbindungen der Struktur (A1) oder (A2) eingesetzt werden. Die Substituenten $R_1$ bis $R_7$ und $R_n$ bis $R_o$ umfassen Wasserstoff und/oder Alkylgruppen, wobei Alkylgruppen im Sinne der vorliegenden Erfindung lineare oder verzweigte, aliphatische oder cycloaliphatische Gruppen mit 1 bis 6 C-Atomen sind. Vorzugsweise handelt es sich bei den Alkylgruppen um lineare aliphatische Gruppen mit 1 bis 6 C-Atomen, insbesondere um Methyl-, Ethyl-, Propyl-, Butyl-Gruppen.

In dem erfindungsgemäßen Verfahren werden vorzugsweise Verbindungen gemäß den Strukturen (A1) und/oder (A2) in der Mischung (A) eingesetzt, bei denen die Substituenten vom Typ $R_1$, $R_2$, $R_3$, $R_4$, $R_5$, $R_6$, $R_7$, $R_n$, $R_m$ und $R_o$ Wasserstoff und/oder unsubstituierte Alkylgruppen mit 1 bis 6 C-Atomen sind und das Strukturfragment A unsubstituiertes Alkylen mit 1 bis 6 C-Atomen oder unsubstituiertes Phenylen bedeutet. Bevorzugt werden Verbindungen

gemäß den Strukturen (A1) und/oder (A2) mit n, m, o = 0 oder 1 eingesetzt. Ein Beispiel der vorgenannten Verbindungen (A1) ist 2-Ethyl-2-oxazolin.

In einer bevorzugten Ausführungsform des erfindungsgemäßen Verfahrens wird eine Mischung (A) bestehend aus 100 Gew.-% einer oder mehrerer Verbindungen gemäß der Struktur (A2) eingesetzt, wobei m und o vorzugsweise 0 oder 1 sind. Insbesondere werden Verbindungen gemäß der Struktur (A2) eingesetzt, die als Strukturfragment A eine Phenylengruppe aufweisen, wie beispielsweise 1,3-Phenylenbisoxazolin oder 1,4-Phenylenbisoxazolin. Um die Eigenschaften des Reaktivpolymers gezielt einzustellen, kann eine Mischung (A) eingesetzt werden, die Verbindungen gemäß der Struktur (A2) mit $m \neq o$ innerhalb derselben Verbindung (A2u) und/oder Verbindungen gemäß der Struktur (A2) mit m = o innerhalb derselben Verbindung (A2g) aufweist. So können beispielsweise als Mischung (A) Verbindungen mit m = 1 und o = 0 innerhalb derselben Verbindung (A2g) eingesetzt werden.

Bei dem erfindungsgemäßen Verfahren ist es jedoch insbesondere von Vorteil eine Mischung (A) einzusetzen, die sowohl Verbindungen gemäß der Struktur (A2) mit m und o = 1 innerhalb derselben Verbindung (A2g6) als auch Verbindungen gemäß der Struktur (A2) mit m und o = 0 innerhalb derselben Verbindung (A2g5) aufweist. Auf diese Weise können in dem erfindungsgemäßen Verfahren die Eigenschaften des resultierenden Reaktivpolymers, wie beispielsweise die Viskosität, die Reaktivität und der Schmelzpunkt, gesteuert werden. Beispiele der vorgenannten Verbindungen der Struktur (A2) sind 1,3-Phenylenbisoxazolin und 1,4-Phenylenbisoxazolin.

Als Verbindungen gemäß der Struktur (A2g5) wird vorzugsweise 1,3-Phenylenbisoxazolin oder 1,4-Phenylenbisoxazolin eingesetzt.

Bevorzugt wird in dem erfindungsgemäßen Verfahren eine Mischung (A) eingesetzt, die

10 bis 90 Gew.-% an Verbindungen der Struktur (A2g6) und
90 bis 10 Gew.-% an Verbindungen der Struktur (A2g5), besonders bevorzugt
30 bis 70 Gew.-% an Verbindungen der Struktur (A2g6) und
70 bis 30 Gew.-% an Verbindungen der Struktur (A2g5), und ganz besonders bevorzugt
45 bis 55 Gew.-% an Verbindungen der Struktur (A2g6) und
55 bis 45 Gew.-% an Verbindungen der Struktur (A2g5),

aufweist.

In dem erfindungsgemäßen Verfahren werden vorzugsweise Phenolharze (B), die durch Kondensation von Phenolen mit Aldehyden, insbesondere Formaldehyd, gewonnen werden, eingesetzt. So können in diesem Verfahren Phenolharze, ausgewählt aus dem Novolak- und/oder Resol-Typ, eingesetzt werden. Besonders bevorzugt werden Novolake als Phenolharz (B) eingesetzt. Vorzugsweise weisen die eingesetzten Phenolharze (B) einen Gehalt an freiem Formaldehyd von weniger als 0,1 Gew.-% auf (Bestimmung nach DIN EN 120). Dies hat den Vorteil, dass keine Emissionen an Formaldehyd auftreten.

Vorzugsweise werden in dem erfindungsgemäßen Verfahren die Mischung (A) und das Phenolharz (B) in einem Gewichtsverhältnis von Mischung (A) zu Phenolharz (B) vorzugsweise von 99:1 bis 1:99, bevorzugt von 90:10 bis 10:90, besonders bevorzugt von 75:25 bis 25:75 und ganz besonders bevorzugt von 45:55 bis 55:45 eingesetzt.

In dem erfindungsgemäßen Verfahren können sowohl Lewis-Säuren als auch Lewis-Basen als Katalysator eingesetzt werden, vorzugsweise werden Trialkyl- oder Triarylphosphite eingesetzt, bevorzugt wird Triphenylphosphit eingesetzt.

In einer besonderen Ausführungsform des erfindungsgemäßen Verfahrens können auch Tetraalkyl- oder Tetraarylphosphoniumsalze, Tetraalkyl- oder Tetraarylammoniumsalze von Halogeniden, Tetrafluorborat, Hexafluorphosphat oder para-Toluolsulfonsäure als Katalysator eingesetzt werden.

Der Katalysator wird in dem erfindungsgemäßen Verfahren vorzugsweise in einer Menge von 0 bis 2 Gew.-% bezogen auf die Einsatzstoffe Mischung (A) und Phenolharz (B), bevorzugt in einer Menge von 0,01 bis 1 Gew.-% und besonders bevorzugt in einer Menge von 0,01 bis 0,4 Gew.-% eingesetzt.

Abhängig von der Verwendung des Reaktivpolymers kann es von Vorteil sein, das erfindungsgemäße Verfahren ohne den Einsatz eines Katalysators durchzuführen. Dies ist insbesondere bei Verwendungen des Reaktivpolymers empfehlenswert, bei der der Masseverlust des daraus resultierenden Werkstoffs bei einer thermischen Behandlung so gering wie möglich sein sollte.

In dem erfindungsgemäßen Verfahren können neben dem Katalysator auch Antioxidantien zugegeben werden, bevorzugt in dem für das Verfahren eingesetzten Aggregat, beispielsweise in dem Extruder. Vorzugsweise werden als Antioxidantien sogenannte sterisch gehinderte Phenole eingesetzt, bevorzugt sind dies Verbindungen gemäß der Struktur (3),

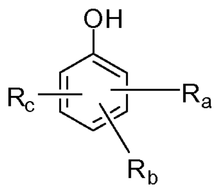

(3)

mit $R_a$, $R_b$, $R_c$ = Wasserstoff, Alkyl-, Alkylaryl- oder Cycloalkylgruppe,
wobei die Substituenten vom Typ $R_a$, $R_b$, $R_c$ gleich oder verschieden sowie substituiert oder unsubstituiert sein können,

wie beispielsweise dem Reaktionsprodukt von 4-Methylphenol mit Dicyclopentadien und Isobuten gemäß Struktur (4),

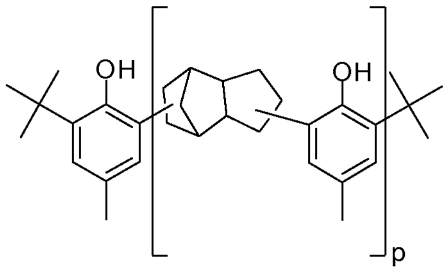

(4)

mit p = 1 bis 5.

Die Antioxidantien werden vorzugsweise in einer Menge von 0,1 bis 2 Gew.-%, bevorzugt von 0,2 bis 1,5 Gew.-% und besonders bevorzugt von 0,3 bis 1,2 Gew.-% bezogen auf die Einsatzstoffe Mischung (A) und Phenolharz (B) in dem erfindungsgemäßen Verfahren eingesetzt.

Ferner können in dem erfindungsgemäßen Verfahren auch Stabilisatoren eingesetzt werden, vorzugsweise werden sogenannte HALS-Verbindungen (Hindered Amine Light Stabilizers) eingesetzt. Auch die Zugabe einer Mischung an verschiedenen HALS-Verbindungen ist möglich. Durch die Zugabe von Stabilisatoren kann die Langzeitstabilität des resultierenden Reaktivpolymers verbessert werden.

Bevorzugt werden in dem erfindungsgemäßen Verfahren Derivate des 2,2,6,6-Tetramethylpiperidin-4-on als Stabilisator eingesetzt. Derivate des 2,2,6,6-Tetramethylpiperidin-4-on im Sinne der vorliegenden Erfindung sind vorzugsweise Verbindungen gemäß der Struktur (5)

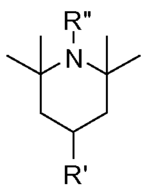

(5)

mit R' = Alkoxygruppe,

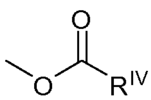, 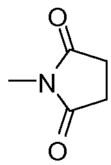, 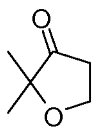 oder 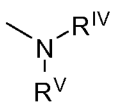

und R" = Sauerstoffradikal (-O•), Wasserstoff, Alkyl- oder Alkoxygruppe,

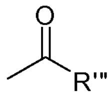,

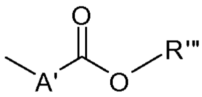 oder 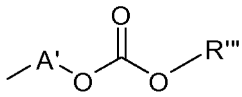,

wobei R"' und $R^{IV}$ = Alkylgruppe, $R^{V}$ = Heterocyclus und A' = Alkylengruppe und die Alkyl-, Alkoxy-, Alkylengruppen und Heterocyclen substituiert oder unsubstituiert sind.

Besonders bevorzugt werden in dem erfindungsgemäßen Verfahren Stabilisatoren gemäß den folgenden Strukturen (6) bis (8) eingesetzt:

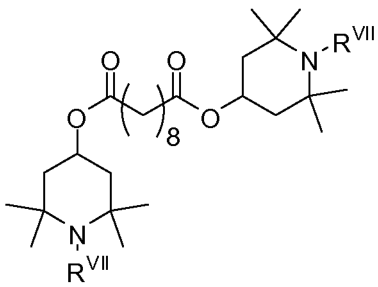

(6)

mit $R^{VII}$ = Wasserstoff, Alkyl- oder Alkoxygruppe,

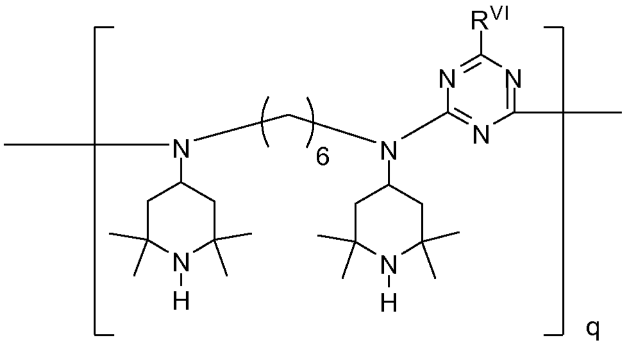

(7)

mit

$R^{VI}$ = 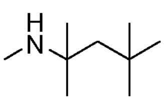, 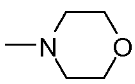 oder 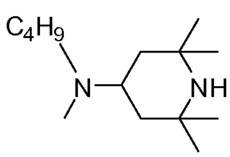,

q = 2 bis 10,
oder

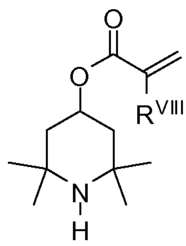

(8)

mit $R^{VIII}$ = Wasserstoff oder Alkylgruppe.

In einer weiteren Ausführungsform des erfindungsgemäßen Verfahrens werden sogenannte Polymer-bound-HALS-Verbindungen eingesetzt, wie beispielsweise

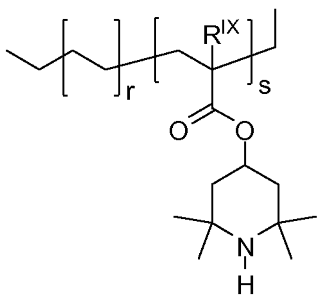

(9)

mit $R^{XI}$ = Wasserstoff oder Alkylgruppe und
r, s ≥ 10.

Bei diesen Polymer-bound-HALS-Verbindungen handelt es sich um 2,2,6,6-Tetramethylpiperidin-4-on-Derivate, die an oder in einer Polymerkette eingebunden sind. Als Polymerkette eignen sich funktionalisierte Polyolefine, insbesondere Copolymere basierend auf Ethylen und Estern der (Meth)acrylsäure und ganz besonders bevorzugt Copolymere basierend auf Ethylen und Methacrylat. Besonders geeignete Beispiele an Polymer-bound-HALS-Verbindungen sind in EP 0 063 544 A1 offenbart, deren Inhalt in der vorliegenden Erfindung mit eingeschlossen ist.

Die Zugabe der Stabilisatoren kann in dem Aggregat, beispielsweise dem Extruder, zu den Einsatzstoffen Mischung (A) und Phenolharz (B) erfolgen. Insbesondere werden die Stabilisatoren in einer Menge von 0,1 bis 2 Gew.%, bevorzugt von 0,2 bis 1,5 Gew.-% und besonders bevorzugt von 0,3 bis 1,2 Gew.-% bezogen auf die Einsatzstoffe Mischung (A) und Phenolharz (B) in dem erfindungsgemäßen Verfahren eingesetzt.

Bevorzugt werden in dem erfindungsgemäßen Verfahren sowohl sterisch gehinderte Phenole als auch HALS-Verbindungen den Einsatzstoffen beigemischt.

In einer weiteren Ausführungsform des erfindungsgemäßen Verfahrens können die Stabilisatoren und/oder die Antioxidantien nachträglich in einem nachgeschalteten Aggregat dem Reaktivpolymer beigemischt werden.

In dem erfindungsgemäßen Verfahren ist es vorteilhaft, zumindest einen Entlüfter den Einsatzstoffen Mischung (A) und Phenolharz (B) zuzugeben. Als Entlüfter können beispielsweise Silikonöle oder silikonmodifizierte Polyglycole und Polyether, schaumzerstörende Polysiloxane oder Polymere, polyethermodifizierte Polymethylalkylsiloxane eingesetzt werden, wie sie beispielsweise von der Fa. Byk unter den Handelsnamen Byk®-A 506, Byk®-A 525, Byk®-A 530 oder Byk®-A 535 vertrieben werden. Der Zusatz eines Entlüfters hat den Vorteil, dass die Blasenbildung in dem Reaktivpolymer als auch in dem späteren Werkstoff deutlich abgesenkt werden kann. Der Entlüfter wird vorzugsweise von 0,1 bis 1 Gew.-% bezogen auf die Einsatzstoffe Mischung (A) und Phenolharz (B) zugegeben, bevorzugt von 0,2 bis 0,8 Gew.-% und besonders bevorzugt von 0,3 bis 0,7 Gew.-%.

Eine mögliche Anwendung des erfindungsgemäßen Reaktivpolymers sind beispielsweise auch Schäume, bei der Herstellung dieses dafür geeigneten Reaktivpolymers werden vorzugsweise Treibmittel anstelle der Entlüfter eingesetzt. Als Treibmittel werden vorzugsweise organische Lösungsmittel, bevorzugt Methanol, eingesetzt. Diese Treibmittel werden vorzugsweise in einer Menge von 0,5 bis 5 Gew.-% bezogen auf die Einsatzstoffe Mischung (A) und Phenolharz (B) zugegeben.

Vorteilhaft ist es ferner in dem erfindungsgemäßen Verfahren den Einsatzstoffen Mischung (A) und Phenolharz (B) zumindest ein Trennmittel zuzugeben, dadurch kann die Handhabung des Verfahrens noch einmal weiter verbessert werden. Das Trennmittel weist vorzugsweise

- Silikone, beispielsweise in Form von Ölen, Ölemulsionen in Wasser, Fetten und Harzen,

- Wachse, beispielsweise natürliche und synthetische Paraffine mit und ohne funktionelle Gruppen,
- Metallseifen bzw. Metallsalze von Fettsäuren, wie beispielsweise Calcium-, Blei-, Magnesium-, Aluminium- und/oder Zinkstearat,
- Fette,
- Polymere, beispielsweise Polyvinylalkohol, Polyester und Polyolefine,
- Phosphorsäuremonoester,
- Fluorkohlenwasserstoffe und/oder
- anorganische Trennmittel, wie beispielsweise Graphit-, Talk- und Glimmerpuder

auf.

Als Trennmittel werden bevorzugt interne Trennmittelsysteme eingesetzt, die den Einsatzstoffen zugegeben werden und sich entweder an der Oberfläche des Formteils anreichern oder eine schnellere Aushärtung der Oberfläche bewirken können, so dass es zwischen Formenwand und Formteil zu keinem Verbund kommen kann. Insbesondere eignen sich für das erfindungsgemäße Verfahren Trennmittel der Fa. Acmos Chemie KG, die unter den Handelsnamen ACMOSAL® 82-837, ACMOSAL® 82-847, ACMOSAL® 82-860, ACMOSAL® 82-866, ACMOSAL® 82-9018, ACMOSAL® 82-853 vertrieben werden. Das Trennmittel wird besonders bevorzugt in einer Menge von 0,1 bis 2 Gew.-%, ganz besonders bevorzugt von 0,2 bis 1,5 Gew.-% den Einsatzstoffen Mischung (A) und Phenolharz (B) zugegeben.

Ferner können dem erfindungsgemäßen Verfahren auch Netzmittel, vorzugsweise Tenside, bevorzugt ethoxylierte Fettalkohole oder Natriumlaurylsulfat, eingesetzt werden. Die Zugabe des Netzmittels erfolgt in einer Menge von 0,1 bis 2 Gew.-% bezogen auf die Einsatzstoffe Mischung (A) und Phenolharz (B).

Des Weiteren können in dem erfindungsgemäßen Verfahren auch Flammschutzmittel, wie beispielsweise halogenierte organische Verbindungen oder organische Phosphorverbindungen eingesetzt werden. Bevorzugt werden hierfür organische Phosphorverbindungen, insbesondere Diphenylkresylphosphat oder Ammoniumpolyphosphate, eingesetzt. Das Flammschutzmittel wird vorzugsweise in einer Menge von 1 bis 30 Gew.-%, bevorzugt von 2 bis 15 Gew.-% und besonders bevorzugt von 5 bis 10 Gew.-% den Einsatzstoffen Mischung (A) und Phenolharz (B) zugegeben. Bevorzugt werden Flammschutzmittel der Fa. Clariant, die unter dem Handelsnamen Exolit® AP, insbesondere Exolit® 263, Exolit® 442, Exolit® 454, Exolit® 455, Exolit® 470, Exolit® AP 420, Exolit® AP 422, Exolit® AP 423, Exolit® AP 462, Exolit® AP 740, Exolit® AP 751, Exolit® AP 760, vertrieben werden, eingesetzt.

In dem erfindungsgemäßen Verfahren können neben den bereits genannten Additiven noch weitere Additive bzw. Zuschlagsstoffe eingesetzt werden, wie beispielsweise:

- Thioxotrophiermittel, beispielsweise pyrogene Kieselsäuren, bevorzugt Aerosile,
- Füllstoffe und Pigmente, beispielsweise Titandioxid,
- Nanopartikel, beispielsweise Schichtsilikate, insbesondere Natrium-Lithium-Magnesiumsilikate, wie sie beispielsweise von der Fa. Rockwood unter dem Handelsnamen Laponite® S482 vertrieben werden,
- Kupplungsreagenzien, beispielsweise Silane, vorzugsweise N-Cycloalkylaminoalkylalkyldialkoxysilane, bevorzugt N-Cyclohexylaminomethylmethyldiethoxysilan, vertrieben unter dem Handelsnamen Geniosil® XL 924 von der Fa. Wacker Chemie AG,
- Flexibilisierungsmittel, wie beispielsweise Glykole,
- Low-profile-Additive, beispielsweise Thermoplaste, bevorzugt Polyvinylacetate, wie sie von der Fa. Wacker Chemie AG unter dem Handelsname Vinnapas® B 60 sp vertrieben werden,
- Additive zur Steigerung der elektrischen Leitfähigkeit, beispielsweise Calciumsilikat,
- Photoinitiatoren, vorzugsweise $\alpha$-Hydroxyketone, bevorzugt 2-Hydroxy-2-methyl-1-propan-1-on, besonders bevorzugt Darocure® 1173 der Fa. Ciba,
- lichtabsorbiernde Additive, vorzugsweise 2,4-Bis(2,4-dimethylphenyl)-6-(2-hydroxy-4-isooctyloxyphenyl)-1,3,5-triazine, wie beispielsweise CYASORB® UV-1164L der Fa. Cytec Industries Inc. und/oder
- Antistatika.

In einer besonders bevorzugten Ausführungsform des erfindungsgemäßen Verfahrens werden den Einsatzstoffen Mischung (A) und Phenolharz (B) zumindest ein Entlüfter, zumindest ein Stabilisator und zumindest ein Trennmittel zugegeben.

Weiterhin ist es vorteilhaft, wenn in dem erfindungsgemäßen Verfahren zusätzlich Reaktivverdünner beigemischt werden. Hierbei handelt es sich üblicherweise um niedermolekulare, ethylenisch ungesättigte Verbindungen zur Viskositätserniedrigung. In der Regel handelt es sich hierbei um Acrylat- oder Methacrylat-haltige Stoffe, die bei Raumtemperatur flüssig sind und damit in der Lage sind, die Gesamtviskosität der Formulierung herabzusetzen. Beispiele für solche Produkte sind insbesondere Isobornylacrylat, Hydroxypropylmethacrylat, Trimethylolpropanformalmonoacrylat, Tetrahydro-fufurylacrylat, Phenoxyethylacrylat, Trimethylenpropantriacrylat, Dipropylenglycoldiacrylat, Tripropylenglycoldiacrylat, Hexandioldiacrylat, Pentaerythrittetraacrylat, Laurylacrylat sowie propoxilierte oder ethoxylierte Varianten

dieser Reaktivverdünner und/oder urethanisierte Reaktivverdünner wie EBECRYL® 1039 (Cytec) und andere. Außerdem in Frage kommen auch andere flüssige Komponenten, die in der Lage sind, unter Bedingungen der radikalischen Polymerisation mit zu reagieren, z. B. Vinylether oder Allylether. Alternativ können Epoxidharze als Reaktivverdünner eingesetzt werden. Vorzugsweise handelt es sich bei den in der vorliegenden Erfindung eingesetzten Reaktivverdünnern um Araldit® LY 1135-1 A Harz (Epoxyharz der Firma Huntsman Advanced Materials (Europe) BVBA). Der Anteil der Reaktivverdünner beträgt 0,1 bis 20 Gew.-%, vorzugsweise 1 bis 5 Gew.-%, bezogen auf die Einsatzstoffe Mischung (A) und Phenolharz (B). Der Zusatz der Reaktivverdünner hat den Vorteil, dass damit die Verarbeitungsviskosität eingestellt werden kann.

Das mittels dem erfindungsgemäßen Verfahren hergestellte Reaktivpolymer, zeichnet sich dadurch aus, dass es

I. ein Phenolharz (B),
II. eine Mischung (A) umfassend Verbindungen gemäß der Struktur (A1) und/oder Verbindungen gemäß der Struktur (A2) und
III. Reaktionsprodukt aus den Verbindungen gemäß der Struktur (A1) und/oder (A2) und dem Phenolharz (B)

aufweist, wobei das Reaktivpolymer mindestens 5 Gew.-% an chemisch ungebundenen Verbindungen gemäß der Struktur (A1) und/oder (A2) bezogen auf das Reaktivpolymer aufweist. Chemisch ungebundene Verbindungen meint, dass die Verbindungen gemäß der Struktur (A1) und/oder (A2) nicht mit dem Phenolharz reagiert haben und somit frei im erfindungsgemäßen Reaktivpolymer vorliegen.

Der Anteil an chemisch ungebundenen Verbindungen gemäß der Struktur (A1) und/oder (A2) wird wie folgt ermittelt (beispielsweise für 1,3-Phenylenbisoxazolin):

15 g der Probe (Reaktivpolymer, beispielsweise gemäß Beispiel 1) werden in einer Extraktionshülse vorgelegt und 18 h mit Methanol unter Rückfluss extrahiert. 1 ml dieser methanolischen Lösung wird mit 10 ml Acetonitril und 1 ml HMDS (Hexamethyldisilazan) zur Derivatisierung versetzt und 1 h bei 100 °C erhitzt. Anschließend wird die Probe gaschromatographisch bzgl. der Flächenprozente für 1,3-Phenylenbisoxazolin untersucht.

Zur Umrechnung von Flächen- in Gewichtsprozent wird 1,3-Phenylenbisoxazolin (Reinheit 99,8 %) in folgender Weise zur Kalibrierung eingesetzt:

168,5 mg 1,3-Phenylenbisoxazolin (Reinheit 99,8 %) wird mit 10 ml Acetonitril und 1 ml HMDS versetzt, 1 h bei 100 °C getempert und anschließend ebenfalls gaschromatographisch untersucht.

Aus den Flächenprozentwerten der extrahierten Probe und der als Standard behandelten Probe kann unter Berücksichtigung der Einwaagen der Gehalt an freiem 1,3-Phenylenbisoxazolin im Reaktivpolymer berechnet werden.

Der Gehalt an chemisch ungebundenen Verbindungen gemäß der Struktur (A1) und/oder (A2) beträgt in dem erfindungsgemäßen Reaktivpolymer vorzugsweise mindestens 5 Gew.-%, bevorzugt von 8 bis 40 Gew.-%, besonders bevorzugt von 10 bis 35 Gew.-% bezogen auf das Reaktivpolymer.

Dieses Reaktivpolymer weist vorzugsweise Verbindungen gemäß den Strukturen (A1) und/oder (A2) in der Mischung (A) auf, bei denen die Substituenten vom Typ $R_1$, $R_2$, $R_3$, $R_4$, $R_5$, $R_6$, $R_7$, $R_n$, $R_m$ und $R_o$ Wasserstoff und/oder unsubstituierte Alkylgruppen mit 1 bis 6 C-Atomen sind und das Strukturfragment A unsubstituiertes Alkylen mit 1 bis 6 C-Atomen oder unsubstituiertes Phenylen bedeutet. Bevorzugt weist dieses Reaktivpolymer Verbindungen gemäß den Strukturen (A1) und/oder (A2) mit n, m, o = 0 oder 1 auf.

In einer bevorzugten Ausführungsform dieses Reaktivpolymers weist es eine Mischung (A) bestehend aus 100 Gew.-% einer oder mehrerer Verbindungen gemäß der Struktur (A2) auf, wobei m und o vorzugsweise 0 oder 1 sind. Insbesondere weist es Verbindungen gemäß der Struktur (A2) auf, die als Strukturfragment A eine Phenylengruppe aufweisen, wie beispielsweise 1,3-Phenylenbisoxazolin oder 1,4-Phenylenbisoxazolin. Um die Eigenschaften des Reaktivpolymers gezielt einzustellen, kann dieses Reaktivpolymer eine Mischung (A), die Verbindungen gemäß der Struktur (A2) mit $m \neq o$ innerhalb derselben Verbindung (A2u) und/oder Verbindungen gemäß der Struktur (A2) mit m = o innerhalb derselben Verbindung (A2g) aufweist, aufweisen. So können beispielsweise als Mischung (A) nur Verbindungen mit m = 1 und o = 0 innerhalb derselben Verbindung (A2g) enthalten sein.

Für dieses Reaktivpolymer kann es jedoch von Vorteil sein, eine Mischung (A) aufzuweisen, die sowohl Verbindungen gemäß der Struktur (A2) mit m und o = 1 innerhalb derselben Verbindung (A2g6) als auch Verbindungen gemäß der Struktur (A2) mit m und o = 0 innerhalb derselben Verbindung (A2g5) aufweist. Auf diese Weise können die Eigenschaften dieses Reaktivpolymers, wie beispielsweise die Viskosität, die Reaktivität und der Schmelzpunkt, gesteuert werden. Als Verbindungen gemäß der Struktur (A2g5) weist dieses Reaktivpolymer vorzugsweise 1,3-Phenylenbisoxazolin oder 1,4-Phenylenbisoxazolin auf.

Bevorzugt weist dieses Reaktivpolymer eine Mischung (A) auf, die

10 bis 90 Gew.-% an Verbindungen der Struktur (A2g6) und
90 bis 10 Gew.-% an Verbindungen der Struktur (A2g5), besonders bevorzugt
30 bis 70 Gew.-% an Verbindungen der Struktur (A2g6) und
70 bis 30 Gew.-% an Verbindungen der Struktur (A2g5), und ganz besonders bevorzugt
45 bis 55 Gew.-% an Verbindungen der Struktur (A2g6) und
55 bis 45 Gew.-% an Verbindungen der Struktur (A2g5),

aufweist.

Die Mengenangaben beziehen sich dabei auf die Mengen der im oben genannten Verfahren eingesetzten Ausgangsstoffe, umfassen also somit die chemisch gebundenen und chemisch ungebundenen Verbindungen im Reaktivpolymer.

Dieses Reaktivpolymer weist vorzugsweise Phenolharze (B), die durch Kondensation von Phenolen mit Aldehyden, insbesondere Formaldehyd, gewonnen werden, auf. So kann diese Reaktivpolymer Phenolharze, ausgewählt aus dem Novolak- und/oder Resol-Typ, aufweisen. Besonders bevorzugt weist es Novolake als Phenolharz (B) auf.

Neben dem Phenolharz (B) kann dieses Reaktivpolymer auch Polymere aufweisen, die ein Reaktionsprodukt aus den Verbindungen gemäß den Strukturen (A1) und/oder (A2) und dem Phenolharz (B) sind.

Dieses Reaktivpolymer liegt vorzugsweise in Granulatform oder geschuppter Form vor.

Aufgrund des Herstellungsverfahrens kann dieses Reaktivpolymer noch einen Katalysator in Form von Lewis-Säuren als auch Lewis-Basen, vorzugsweise Trialkyl- oder Triarylphosphite und bevorzugt Triphenylphosphit aufweisen. Es kann jedoch auch Tetraalkyl- oder Tetraarylphosphoniumsalze, Tetraalkyl- oder Tetraarylammoniumsalze von Halogeniden, Tetrafluorborat, Hexafluorphosphat oder para-Toluolsulfonsäure aufweisen.

Der Menge an Katalysator in diesem Reaktivpolymer beträgt vorzugsweise von 0 bis 2 Gew.-% bezogen auf das Reaktivpolymer, bevorzugt von 0,01 bis 1 Gew.-% und besonders bevorzugt von 0,01 bis 0,4 Gew.-%.

Abhängig von der Verwendung des Reaktivpolymers kann es von Vorteil sein, dass dieses Reaktivpolymer keinen Katalysator aufweist. Dies ist insbesondere bei Verwendungen des Reaktivpolymers empfehlenswert, bei der der Masseverlust des daraus resultierenden Werkstoffs bei einer thermischen Behandlung so gering wie möglich sein sollte.

Die Molekulargewichtsverteilung dieses Reaktivpolymers beträgt vorzugsweise als Zentrifugenmittel $M_z$ von 1000 bis 4000 g/mol, bevorzugt von 1100 bis 3000 und besonders bevorzugt von 1200 bis 2000, als Gewichtsmittel $M_w$ vorzugsweise von 500 bis 2000, bevorzugt von 600 bis 1500 und besonders bevorzugt von 800 bis 1300 und als Zahlenmittel $M_z$ von 400 bis 800, bevorzugt von 450 bis 750 und besonders bevorzugt von 500 bis 700. Die Bestimmung der Molekulargewichtsverteilung erfolgt mittels Gelpermeationschromatographie (GPC/DIN 55672-1; das Elutionsmittel Tetrahydrofuran enthält 1 Gew. % n-Butylamin).

Die Viskosität dieses Reaktivpolymers (Bestimmung gemäß DIN 53019-1) beträgt vorzugsweise von 1000 bis 10000 mPa gemessen bei 160°C, bevorzugt von 2000 bis 8000 mPa und besonders bevorzugt von 3000 bis 7000 mPa.

Dieses Reaktivpolymer kann Antioxidantien aufweisen, vorzugsweise weist es sogenannte sterisch gehinderte Phenole auf, bevorzugt sind dies Verbindungen gemäß der Struktur (3),

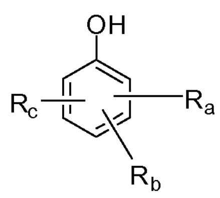

(3)

mit $R_a$, $R_b$, $R_c$ = Wasserstoff, Alkyl-, Alkylaryl- oder Cycloalkylgruppe,
wobei die Substituenten vom Typ $R_a$, $R_b$, $R_c$ gleich oder verschieden sowie substituiert oder unsubstituiert sein können,

wie beispielsweise dem Reaktionsprodukt von 4-Methylphenol mit Dicyclopentadien und Isobuten gemäß Struktur (4),

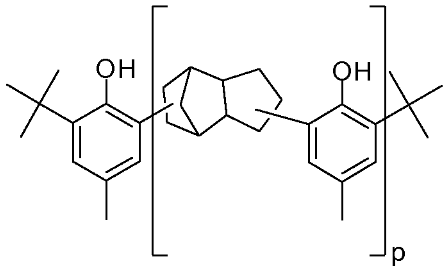

(4)

mit p = 1 bis 5.

Insbesondere weist es diese Antioxidantien in einer Menge von 0,1 bis 2 Gew.-%, bevorzugt von 0,2 bis 1,5 Gew.-% und besonders bevorzugt von 0,3 bis 1,2 Gew.-% bezogen auf das Reaktivpolymer auf.

Ferner kann dieses Reaktivpolymer auch Stabilisatoren aufweisen, vorzugsweise weist es sogenannte HALS-Verbindungen (Hindered Amine Light Stabilizers), Derivate des 2,2,6,6-Tetramethylpiperidin-4-on, auf. Dies hat den Vorteil, dass dadurch die Langzeitstabilität des Reaktivpolymers verbessert werden kann.

Bevorzugt weist dieses Reaktivpolymer Stabilisatoren gemäß der Struktur (5)

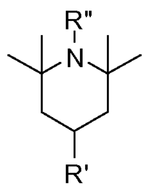

(5)

mit R' = Alkoxygruppe,

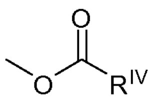 , 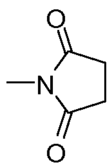 , 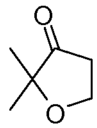 oder 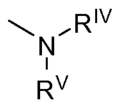

R" = Sauerstoffradikal (-O●), Wasserstoff, Alkyl- oder Alkoxygruppe,

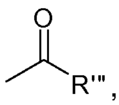 , 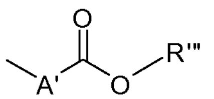 oder 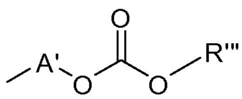 ,

wobei $R'''$ und $R^{IV}$ = Alkylgruppe, $R^{V}$ = Heterocyclus und A' = Alkylengruppe und die Alkyl-, Alkoxy-, Alkylengruppen und Heterocyclen substituiert oder unsubstituiert sind,

auf. Besonders bevorzugt weist dieses Reaktivpolymer Stabilisatoren gemäß den folgenden Strukturen (6) bis (8) auf:

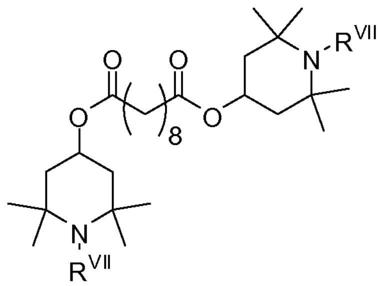

(6)

mit $R^{VII}$ = Wasserstoff, Alkyl- oder Alkoxygruppe,

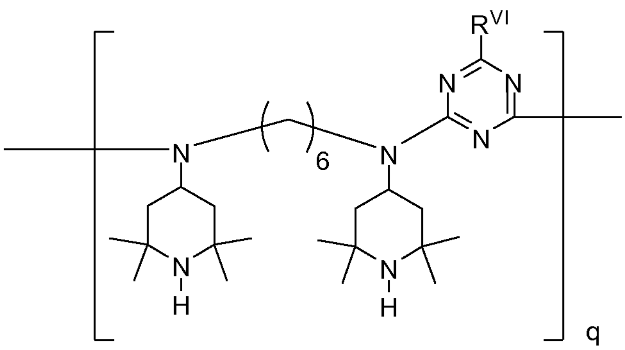

(7)

mit

$R^{VI}$ = 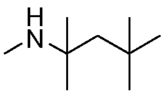, 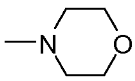 oder 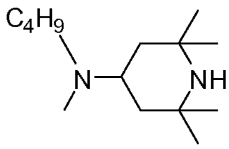,

q = 2 bis 10,
oder

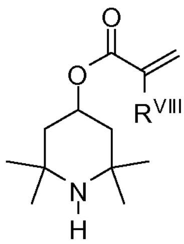

(8)

mit $R^{VIII}$ = Wasserstoff oder Alkylgruppe.

In einer weiteren Ausführungsform dieses Reaktivpolymers weist dies sogenannte Polymer-bound-HALS-Verbindungen auf, wie beispielsweise

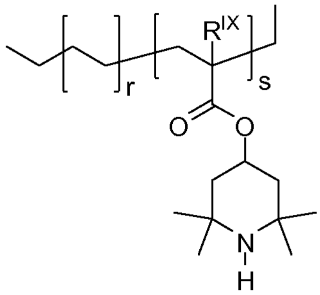

(9)

mit $R^{IX}$ = Wasserstoff oder Alkylgruppe und
r, s $\geq$ 10.

Insbesondere weist dieses Reaktivpolymer die Stabilisatoren in einer Menge von 0,1 bis 2 Gew.-%, bevorzugt von 0,2 bis 1,5 Gew.-% und besonders bevorzugt von 0,3 bis 1,2 Gew.-% bezogen auf das Reaktivpolymer auf.

Bevorzugt weist dieses Reaktivpolymer sowohl sterisch gehinderte Phenole als auch HALS-Verbindungen auf.

Vorteilhaft ist es, wenn dieses Reaktivpolymer zumindest einen Entlüfter, wie beispielsweise Silikonöle oder silikonmodifizierte Polyglycole und Polyether, schaumzerstörende Polysiloxane oder Polymere, polyethermodifizierte

Polymethylalkylsiloxane, aufweist, wie sie beispielsweise von der Fa. Byk unter den Handelsnamen Byk®-A 506, Byk®-A 525, Byk®-A 530 oder Byk®-A 535 vertrieben werden. Der Zusatz eines Entlüfters hat den Vorteil, dass die Blasenbildung in dem Reaktivpolymer als auch in dem späteren Werkstoff deutlich abgesenkt werden kann. Das Reaktivpolymer weist den Entlüfter vorzugsweise von 0,1 bis 1 Gew.-%, bevorzugt von 0,2 bis 0,8 Gew.-% und besonders bevorzugt von 0,3 bis 0,7 Gew.-% bezogen auf das Reaktivpolymer auf.

Eine mögliche Anwendung dieses Reaktivpolymers sind beispielsweise auch Schäume, das dafür geeigneten Reaktivpolymers weist daher vorzugsweise Treibmittel, vorzugsweise organische Lösungsmittel, bevorzugt Methanol, anstelle des Entlüfters auf. Diese Treibmittel weist dieses Reaktivpolymer vorzugsweise in einer Menge von 0,5 bis 5 Gew.-% bezogen auf das Reaktivpolymer auf.

Vorteilhaft ist es ferner, wenn dieses Reaktivpolymer zumindest ein Trennmittel aufweist, vorzugsweise

- Silikone, beispielsweise in Form von Ölen, Ölemulsionen in Wasser, Fetten und Harzen,
- Wachse, beispielsweise natürliche und synthetische Paraffine mit und ohne funktionelle Gruppen,
- Metallseifen bzw. Metallsalze von Fettsäuren, wie beispielsweise Calcium-, Blei-, Magnesium-, Aluminium- und/oder Zinkstearat,
- Fette,
- Polymere, beispielsweise Polyvinylalkohol, Polyester und Polyolefine,
- Phosphorsäuremonoester,
- Fluorkohlenwasserstoffe und/oder
- anorganische Trennmittel, wie beispielsweise Graphit-, Talk- und Glimmerpuder.

Als Trennmittel weist dieses Reaktivpolymer bevorzugt interne Trennmittelsysteme auf, insbesondere Trennmittel der Fa. Acmos Chemie KG, die unter den Handelsnamen ACMOSAL® 82-837, ACMOSAL® 82-847, ACMOSAL® 82-860, ACMOSAL® 82-866, ACMOSAL® 82-9018, ACMOSAL® 82-853 vertrieben werden. Das Reaktivpolymer weist das Trennmittel bevorzugt in einer Menge von 0,1 bis 2 Gew.-% und besonders bevorzugt von 0,2 bis 1,5 Gew.-% bezogen auf das Reaktivpolymer auf.

Ferner kann dieses Reaktivpolymer auch Netzmittel, beispielsweise Tenside, bevorzugt ethoxylierte Fettalkohole oder Natriumlaurylsulfat, aufweisen, besonders bevorzugt in einer Menge von 0,1 bis 2 Gew.-% bezogen auf das Reaktivpolymer.

Des Weiteren kann dieses Reaktivpolymer auch Flammschutzmittel, wie beispielsweise halogenierte organische Verbindungen oder organische Phosphorverbindungen, aufweisen. Bevorzugt weist es organische Phosphorverbindungen, insbesondere Diphenylkresylphosphat oder Ammoniumpolyphosphate, als Flammschutzmittel auf. Die Menge des Flammschutzmittels beträgt vorzugsweise von 1 bis 30 Gew.-%, bevorzugt von 2 bis 15 Gew.-% und besonders bevorzugt von 5 bis 10 Gew.-% bezogen auf das Reaktivpolymer. Bevorzugt sind Flammschutzmittel der Fa. Clariant, die unter dem Handelsnamen Exolit® AP, insbesondere Exolit® 263, Exolit® 442, Exolit® 454, Exolit® 455, Exolit® 470, Exolit® AP 420, Exolit® AP 422, Exolit® AP 423, Exolit® AP 462, Exolit® AP 740, Exolit® AP 751, Exolit® AP 760, enthalten.

Neben den bereits genannten Additiven kann dieses Reaktivpolymer noch weitere Additive bzw. Zuschlagsstoffe aufweisen, wie beispielsweise:

- Thioxotrophiermittel, beispielsweise pyrogene Kieselsäuren, bevorzugt Aerosile,
- Füllstoffe und Pigmente, beispielsweise Titandioxid,
- Nanopartikel, beispielsweise Schichtsilikate, insbesondere Natrium-Lithium-Magnesiumsilikate wie sie beispielsweise von der Fa. Rockwood unter dem Handelsnamen Laponite® S482 vertrieben werden,
- Kupplungsreagenzien, beispielsweise Silane, vorzugsweise N-Cycloalkylaminoalkylalkyldialkoxysilane, bevorzugt N-Cyclohexylaminomethylmethyldiethoxysilan, vertrieben unter dem Handelsnamen Geniosil® XL 924 von der Fa. Wacker Chemie AG,
- Flexibilisierungsmittel, wie beispielsweise Glykole,
- Low-profile-Additive, beispielsweise Thermoplaste, bevorzugt Polyvinylacetate, wie sie von der Fa. Wacker Chemie AG unter dem Handelsname Vinnapas® B 60 sp vertrieben werden,
- Additive zur Steigerung der elektrischen Leitfähigkeit, beispielsweise Calciumsilikat,
- Photoinitiatoren, vorzugsweise $\alpha$-Hydroxyketone, bevorzugt 2-Hydroxy-2-methyl-1-propan-1-on, besonders bevorzugt Darocure 1173 der Fa. Ciba,
- Lichtabsorbiernde Additive, vorzugsweise 2,4-Bis(2,4-dimethylphenyl)-6-(2-hydroxy-4-isooctyloxyphenyl)-1,3,5-triazine, wie beispielsweise CYASORB® UV-1164L der Fa. Cytec Industries Inc., und/oder
- Antistatika.

In einer weiteren bevorzugten Ausführungsform weist das Reaktivpolymer zusätzlich einen Reaktivverdünner auf. Geeignete Reaktivverdünner sind bereits vorab bei der Beschreibung des Verfahrens beschrieben. Der Anteil der

Reaktivverdünner beträgt 0,1 bis 20 Gew.-%, vorzugsweise 1 bis 5 Gew.-% und insbesondere 1 bis 5 Gew.-%, bezogen auf das Reaktivpolymer. Durch den Zusatz der Reaktivverdünner kann die Viskosität des Reaktivpolymers eingestellt werden. Der Reaktivverdünner bewirkt zunächst nach vollständiger Durchmischung der Edukte eine Viskositätsabsenkung, was bei bestimmten Applikationen von Vorteil sein kann, beim Beginn der thermischen Härtung bewirkt der Reaktivverdünner eine Anhebung der Viskosität, wobei die Endeigenschaften des Polymeren nicht beeinflusst wird.

In einer besonders bevorzugten Ausführungsform dieses Reaktivpolymers weist dieses zumindest ein Entlüfter, zumindest ein Stabilisator und zumindest ein Trennmittel auf.

Dieses Reaktivpolymer kann zur Herstellung von Werkstoffen, insbesondere von Verbundwerkstoffen, besonders bevorzugt von Faserverbundwerkstoffen verwendet werden. Neben der Verwendung zur Herstellung von Verbundwerkstoffen kann dieses Reaktivpolymer auch zur Herstellung von Kunststoffen eingesetzt werden. Diese hergestellten Kunststoffe weisen vorzugsweise eine Glastemperatur $T_g$ von mindestens 190°C und bevorzugt von mindestens 200°C auf, bevorzugt sind diese Werkstoffe formaldehydfrei.

Je nach Art der Verwendung kann dieses Reaktivpolymer zunächst in handelsüblichem Lösemittel, insbesondere Ketone, gelöst werden.

In der Verwendung des oben beschriebenen Reaktivpolymers können anorganische Verstärkungsfasern, wie beispielsweise Glasfasern, organische Verstärkungsfasern, wie beispielsweise Aramidfasern oder Kohlenstofffasern, metallische Verstärkungsfasern oder Naturfasern eingesetzt werden. Die Verstärkungsfasern können hierbei in Form von Geweben, Gelegen, Multiaxialgelegen, Vliesen, Gestricke, Geflechte oder Matten eingesetzt werden.

Das oben beschriebene Reaktivpolymer wird als Matrix eingesetzt. So kann dieses Reaktivpolymer beispielsweise zur Herstellung von vorimprägnierten Halbzeugen, wie beispielsweise Sheet Molding Compound (SMC) oder Bulk Molding Compound (BMC), eingesetzt werden. Pre-Forming kann ebenfalls zur Herstellung des Halbzeugs eingesetzt werden.

Die Verarbeitung dieses Reaktivpolymers mit Verstärkungsmaterialen zu Verbundwerkstoffen kann durch eine Vielzahl von Verfahren / Technologien gemäß dem Stand der Technik erfolgen. Insbesondere erfolgt die Herstellung des Verbundwerkstoffes mittels einem der nachfolgend gelisteten Technologien:

- Laminieren bzw. auch Handlaminieren,
- Prepreg-Technologie,
- Spritzpressen (Resin Transfer Molding, RTM),
- Infusionsverfahren, wie beispielsweise dem Resin Infusion Molding (RIM) oder dem Seeman Composites Resin Infusion Process (SCRIMP),
- Wickelverfahren,
- Pultrusionsverfahren oder
- Faserlegeverfahren.

Die Härtung dieses Reaktivpolymers kann in der erfindungsgemäßen Anwendung mittels Temperaturzuführung, beispielsweise in einem Ofen, in einem Autoklaven oder in einer Presse, oder auch mittels Mikrowelle erfolgen.

Die hergestellten Verbundwerkstoffe können insbesondere im Bereich der Luftfahrtindustrie, des Transportwesens, wie beispielsweise Automobilindustrie, und der Elektroindustrie eingesetzt werden. Auch können diese Verbundwerkstoffe in Windkraftanlagen, Rohren oder Behältern in Form von Tanks oder Druckkesseln eingesetzt werden.

Das Reaktivpolymer kann auch für die Herstellung von Leichtbaustrukturen eingesetzt werden, insbesondere in Kombination mit Mehrschichtaufbauten, wie beispielsweise Waben oder Schäumen auf der Basis von Phenolharz, Polyimid, Glas, Polyurethan, Polyamid oder Polyvinylchlorid.

Der Einsatz des Reaktivpolymers in Werkstoffen führt insbesondere zu Bauteilen mit einer hohen Wärmeformbeständigkeit und einer hohen Glastemperatur $T_g$. Vorteilhaft ist auch die hohe Zähelastizität dieses Reaktivpolymers, die zu verbesserten Impacteigenschaften führt. Weitere Anwendungsfelder für das Reaktivpolymer bzw. den daraus resultierenden Werkstoffen sind beispielsweise als Schleifmittel, feuerfeste Erzeugnisse, in der Gießereiindustrie, als Batterieseparatoren, im Druck- und Spritzguss, Mineralwolle (u.a. aus Glas, Stein oder Basalt (formaldehydfrei)), zur Papierimprägnierung, in Laminaten basierend aus Glas oder Papier für Elektroisolationen, zur Herstellung von Schäumen, Beschichten von Glas oder Metall, beispielsweise als Kabelschutz, Gummimischungen als Ersatz für Novolak als separate Phase und Co-Reaktant mit anderen Duromeren, wie beispielsweise Bismaleinimid.

Die nachfolgenden Beispiele sollen das erfindungsgemäße Verfahren zur Herstellung von Reaktivpolymeren näher erläutern, ohne dass die Erfindung auf diese Ausführungsform beschränkt sein soll.

**Beispiel 1**

Es wurde mit zwei Stoffströmen gearbeitet. Der Stoffstrom 1 bestand aus einer Mischung von 50,7 Gew.-% eines Phenolharzes (Durez® 33100 der Fa. Sumitomo-Bakelite) und 49,3 Gew.-% 1,3-Phenylenbisoxazolin und der

Stoffstrom 2 bestand aus Triphenylphosphit (0,98 Gew.-% Triphenylphosphit bezogen auf die Gesamtrezeptur).

Der eingesetzte Extruder- ein Zweischneckenextruder vom Typ DSE25 (Brabender GmbH) - bestand aus acht Gehäusen, die separat beheizt und gekühlt werden konnten. So betrug die Soll-Temperatur in Gehäuse 1 30°C, in Gehäuse 2 100°C, in Gehäuse 3-7 180°C und in Gehäuse 8 und dem Kopfteil 160°C. Die Regelung der Temperaturen erfolgte über eine Elektroheizung bzw. Wasserkühlung. Die Schneckendrehzahl betrug 280 Upm.

Der Stoffstrom 1 wurde als Pulvermischung mit einer Menge von 3,00 kg/h in das Gehäuse 1 des Extruders eingespeist, während der Stoffstrom 2 in das Gehäuse 3 des Extruders in einer Menge von 29,6 g/h eingespeist wurde, wobei der Stoffstrom Raumtemperatur hatte.

Die austretende Schmelze wurde über ein Kühlband abgefahren und anschließend gemahlen.

An der erstarrten Schmelze des Reaktivpolymers wird die Charakterisierung vorgenommen:

Ermittlung der Glastemperatur $T_g$

Die Glastemperatur wurde mittels der Dynamische Differenzkalorimetrie (Differential Scanning Calorimetry-DSC- nach DIN 53765) ermittelt, die Konditionierung der Probe erfolgte folgendermaßen:

- Aufheizen von Raumtemperatur auf 150°C und eine Stunde halten,
- Abkühlen auf Raumtemperatur
- Aufheizen auf 250°C und zwei Stunden halten
- Abkühlen auf Raumtemperatur
- Aufheizen auf 300°C - ohne Haltezeit

Bestimmung der Hydroxylzahl

Hydroxylzahl ist diejenige Menge Kaliumhydroxid in Milligramm, die der bei Acetylierung von 1 g Substanz gebundenen Menge an Essigsäure äquivalent ist.

Blindwertbestimmung (Doppelbestimmung)

10 ml Acetylierungslösung (Essigsäureanhydrid - 10 % in Tetrahydrofuran) und 30 ml Katalysatorlösung (4-N-Dimethylaminopyridin - 1 % in Tetrahydrofuran) werden in einem 100 ml Erlenmeyerkolben vorlegt, mit einem Stopfen verschlossen und 30 Minuten bei Raumtemperatur gerührt. Anschließend werden 3 ml Wasser zugegeben und nochmals 30 Minuten gerührt. Dieser Ansatz wird in den Titrinobecher gegeben und mit ca. 4 ml Tetrahydrofuran der Erlenmeyerkolben nachgespült, anschließend wird titriert (Titrino Basic 794 mit einer Elektrode vom Typ LL Solvotrode 6.0229.100 für nicht wässrige Medien).

Hydroxylzahl-Bestimmung der Probe

Die Probe (ca. 1 g) wird in einen 100 ml Erlenmeyerkolben eingewogen und mit 10 ml Acetylierungslösung unter Rühren innerhalb von ca. 5 Minuten gelöst. Anschließend werden 30 ml Katalysatorlösung zugegeben und 30 Minuten bei Raumtemperatur gerührt. Danach werden 3 ml entionisiertes Wasser zugeben und nochmals weitere 30 Minuten gerührt. Dieser Ansatz wird in den Titrinobecher gegeben und mit ca. 4 ml Tetrahydrofuran der Erlenmeyerkolben nachgespült, anschließend wird diese Probe titriert. Der Äquivalenzpunkt liegt bei dem verwendeten Gerät bei ca. 200 mV, wobei bei Phenolharz-haltigen Proben mehrere Endpunkte auftreten können.

Berechnung der Hydroxylzahl

$$\text{Hydroxylzahl} = ((B - A) \times C \times 56{,}1)/E + SZ$$

mit

A Verbrauch an KOH-Lösung (Kalilauge 0,5 N in Ethanol) bei der Titration der Probe in ml
B Verbrauch an KOH-Lösung beim Blindwert in ml
C Konzentration der KOH-Lösung in mol/l
E Einwaage an Probe in g
SZ Säurezahl der Probe in mg KOH/g

Ermittlung der Säurezahl durch separate Bestimmung

1,5 bis 2 g werden in 20 ml Dimethylformamid (DMF) gelöst, mit 80 ml Isopropanol versetzt und anschließend nach DIN EN 12634 titriert.

- Die Hydroxylzahl beträgt 249 mg KOH/g.

- Die Viskosität wurde mittels eines Kegel-Platte-Viskosimeters (DIN 53019-1) ermittelt und beträgt 4365 mPas/160°C.

Charakterisierung des ausgehärteten Reaktivpolymers:

- Die Glastemperatur $T_g$ liegt bei 202°C (DIN 53765).

**Beispiel 2**

Die Prüfkörper werden mit einem Matrixharz im Verbund mit einem Kohlenstofffasergewebe der Fa. ECC, Style 452 entsprechend der ISO 1268 hergestellt und die Zugprüfung wurde gemäß DIN EN ISO 14129 durchgeführt. Als Matrixharz werden verschieden

Polymerzusammensetzungen eingesetzt:

(a) Reaktivpolymer gemäß Beispiel 1
(b) Phenolharz
(c) Cyanatester-Harz
(d) Epoxidharz (Laminierharz Larit® L 305 der Fa. Lange + Ritter GmbH)

Das Reaktivpolymer gemäß Beispiel 1 zeigt gegenüber dem Stand der Technik (Proben (b) bis (d)) eine höhere Zugverformung.

**Beispiel 3:**

14,05 g 1,2-Phenylenbisoxazolin, 13,66 g Phenolharz Durez® 33100 und 0,28 g Triphenylphosphit werden 12 Min. in einer Brabenderknetkammer bei 164 - 167 °C bei 50 UpM gemischt. Eine Teilmenge des Brabenderkneteraustrages wird in einem Reagenzglas in einem Ölbad 4h / 250°C konditioniert (dient der Aushärtung des Reaktivpolymers). Anschließend wird dieses Materials einer isothermen TGA (DIN 51006) 4h / 360 °C unterworfen. Der Masseverlust beträgt 27,6 %.

**Beispiel 4:**

14,0 g 1,2-Phenylenbisoxazolin, 13,6 g Phenolharz Durez® 33100, 0,28 g Triphenylphophit, 0,07 g RALOX® LC und 0,14 g CYASORB® UV-3346 Light Stabilizer werden 7 Min. bei 160°C mit 50 UpM in einer Brabenderknetkammer gemischt. Eine Teilmenge des Brabenderkneteraustrages wird in einem Reagenzglas in einem Ölbad 4h / 250°C konditioniert (dient der Aushärtung des Reaktivpolymeren). Anschließend wird dieses Materials einer isothermen TGA (DIN 51006) 4h / 360°C unterworfen. Der Masseverlust beträgt 24,9 %.

**Beispiel 5:**

Ein Reaktivpolymer gemäß Beispiel 1 wurde unter Zusatz von 0,5 Gew.-% CYASORB® UV-3346 Light Stabilizer und 0, 25 Gew.-% RALOX® LC hergestellt. Die Messung der Viskosität (Kegel-Platte-Viskosimeter nach DIN 53019-1) nach 300 s bei 160°C betrug 1808 mPas.

**Beispiel 6:**

95 Gewichtsteile des Reaktivpolymers gemäß Beispiel 5 werden mit 5 Gewichtsteilen ARALDIT® LY 1135-1 A Harz gemischt. Die Messung der Viskosität (Kegel-Platte-Viskosimeter nach DIN 53019-1) nach 300 s bei 160 °C betrug 11942 mPas. Die Verarbeitungsviskosität lässt sich somit durch Epoxidharzzusatz gezielt beeinflussen.

**Patentansprüche**

1. Verfahren zur kontinuierlichen Herstellung von Reaktivpolymeren durch Umsetzung von einer Mischung (A) umfassend eine oder mehrere Verbindungen gemäß der Struktur (A1)

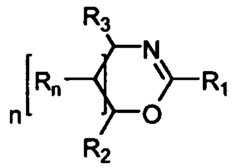

(A1)

mit $R_1$ = Alkyl- oder Phenylgruppe,

$R_2$, $R_3$, $R_n$ = Wasserstoff, Alkylgruppe,
n = 0, 1, 2, 3,

oder
eine oder mehrere Verbindungen gemäß der Struktur (A2)

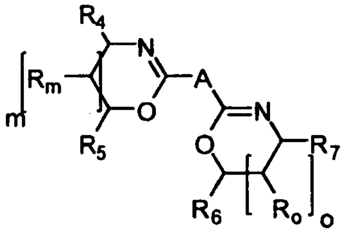

(A2)

mit

A = Alkylen oder Phenylen,
$R_4$, $R_5$, $R_6$, $R_7$,$R_m$,$R_o$ = Wasserstoff, Alkylgruppe,
m, o = 0, 1, 2, 3,

oder Mischungen aus einer oder mehreren Verbindungen gemäß der Struktur (A1) und (A2),
wobei die Substituenten vom Typ $R_1$, $R_2$, $R_3$, $R_4$, $R_5$, $R_6$, $R_7$, $R_n$, $R_m$ und $R_o$ gleich oder verschieden sowie substituiert oder unsubstituiert sein können, das Strukturfragment A substituiert oder unsubstituiert sein kann und m und o gleich oder verschieden sein kann,
mit Phenolharzen (B)
**dadurch gekennzeichnet,**
**dass** die Umsetzung in einem Extruder, Strömungsrohr, Intensivkneter, Intensiv-Mischer oder statischen Mischer durch intensive Durchmischung und kurzzeitiger Reaktion bei Wärmezufuhr und nachfolgender Isolierung des Endproduktes erfolgt, wobei die Verweilzeit der Einsatzstoffe in dem Extruder, Strömungsrohr, Intensivkneter, Intensiv-Mischer oder statischen Mischer von 3 Sekunden bis 15 Minuten beträgt und die Reaktanden bei Temperaturen von 150°C bis 200°C zur Reaktion gebracht werden, und anschließend eine schnelle Abkühlung erfolgt, wobei die Temperatur innerhalb von weniger als 60 Sekunden um mehr als 50 °C abnimmt.

**2.** Verfahren gemäß Anspruch 1,
**dadurch gekennzeichnet,**
**dass** die Verweilzeit der Einsatzstoffe in dem Extruder, Strömungsrohr, Intensivkneter, Intensiv-Mischer oder statischen Mischer 3 Sekunden bis 5 Minuten beträgt.

**3.** Verfahren gemäß zumindest einem der Ansprüche 1 oder 2,
**dadurch gekennzeichnet,**
**dass** der Extruder ein Zweischneckenextruder ist.

**4.** Verfahren gemäß zumindest einem der Ansprüche 1 bis 3,
**dadurch gekennzeichnet,**
**dass** eine Mischung (A) bestehend aus 100 Gew.-% an Verbindungen gemäß der Struktur (A2) eingesetzt wird, wobei m und o vorzugsweise 0 oder 1 sind.

**5.** Verfahren gemäß zumindest einem der Ansprüche 1 bis 4,

**dadurch gekennzeichnet,**
**dass** eine Mischung (A) eingesetzt wird, die Verbindungen gemäß der Struktur (A2) mit m # o innerhalb derselben Verbindung (A2u) und/oder Verbindungen gemäß der Struktur (A2) mit m = o innerhalb derselben Verbindung (A2g) aufweist.

**6.** Verfahren gemäß Anspruch 5,
**dadurch gekennzeichnet,**
**dass** eine Mischung (A) eingesetzt wird, die sowohl Verbindungen gemäß der Struktur (A2) mit m und o = 1 innerhalb derselben Verbindung (A2g6) als auch Verbindungen gemäß der Struktur (A2) mit m und o = 0 innerhalb derselben Verbindung (A2g5) aufweist.

**7.** Verfahren gemäß Anspruch 6,
**dadurch gekennzeichnet,**
**dass** eine Mischung (A) eingesetzt wird, die

30 bis 70 Gew.-% an Verbindungen der Struktur (A2g6) und
70 bis 30 Gew.-% an Verbindungen der Struktur (A2g5),

aufweist.

**8.** Verfahren gemäß zumindest einem der Ansprüche 1 bis 7,
**dadurch gekennzeichnet, dass**
Derivate des 2,2,6,6-Tetramethylpiperidin-4-on als Stabilisator zugegeben werden.

**9.** Verfahren gemäß Anspruch 8,
**dadurch gekennzeichnet,**
**dass** Stabilisatoren gemäß den folgenden Strukturen

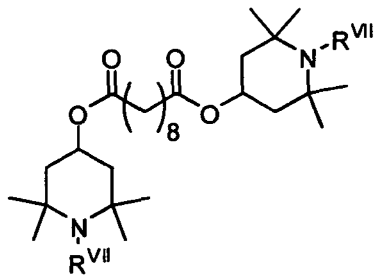

(6)

mit $R^{VII}$ = Wasserstoff, Alkyl- oder Alkoxygruppe,

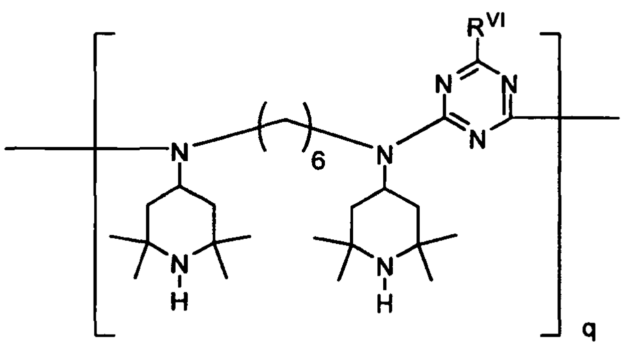

(7)

mit

$R^{VI}$ = 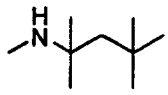 , 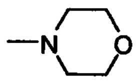 oder 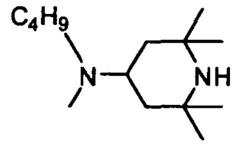 ,

q = 2 bis 10,
oder

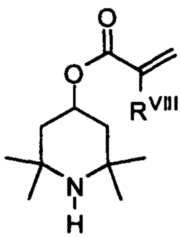

(8)

mit $R^{VIII}$ = Wasserstoff oder Alkylgruppe,
eingesetzt werden.

**10.** Verfahren gemäß Anspruch 8,
**dadurch gekennzeichnet,**
**dass** als Stabilisator zumindest eine Polymer-bound-HALS-Verbindung eingesetzt wird.

**11.** Verfahren gemäß zumindest einem der Ansprüche 8 bis 10,
**dadurch gekennzeichnet,**
**dass** die Stabilisatoren in einer Menge von 0,1 bis 2 Gew.-% bezogen auf die Einsatzstoffe Mischung (A) und Phenolharz (B) eingesetzt werden.

**12.** Verfahren gemäß zumindest einem der Ansprüche 1 bis 11,
**dadurch gekennzeichnet,**
**dass** Antioxidantien gemäß der Struktur (6) zugegeben werden

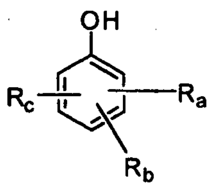

(6)

mit $R_a$, $R_b$, $R_c$ = Wasserstoff, Alkyl-, Alkylaryl- oder Cycloalkylgruppe, wobei die Substituenten vom Typ $R_a$, $R_b$, $R_c$ gleich oder verschieden sowie substituiert oder unsubstituiert sein können.

**13.** Verfahren gemäß Anspruch 9,
**dadurch gekennzeichnet,**
**dass** Antioxidantien gemäß Struktur (7) zugegeben werden,

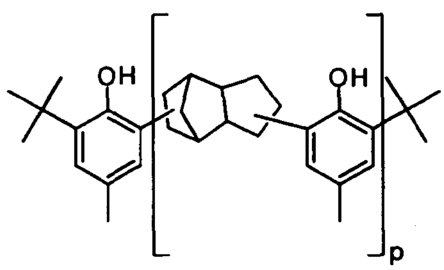

(7)

mit p = 1 bis 5.

**14.** Verfahren gemäß zumindest einem der Ansprüche 1 bis 13,
**dadurch gekennzeichnet,**
**dass** den Einsatzstoffen Mischung (A) und Phenolharz (B) zumindest ein Entlüfter zugegeben wird.

**15.** Verfahren gemäß Anspruch 14,
**dadurch gekennzeichnet,**
**dass** als Entlüfter Silikonöle oder silikonmodifizierte Polyglycole und Polyether, schaumzerstörende Polysiloxane oder Polymere, polyethermodifizierte Polymethylalkylsiloxane eingesetzt werden.

**16.** Verfahren gemäß zumindest einem der Ansprüche 1 bis 15,
**dadurch gekennzeichnet,**
**dass** den Einsatzstoffen Mischung (A) und Phenolharz (B) zumindest ein Trennmittel zugegeben wird.

## Claims

**1.** Process for the continuous preparation of reactive polymers by reaction of a mixture (A) comprising one or more compounds having the structure (A1)

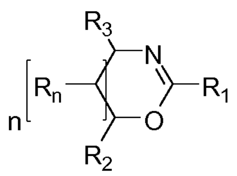

(A1)

where $R_1$ = alkyl or phenyl group,
$R_2$, $R_3$, $R_n$ = hydrogen, alkyl group,
n = 0, 1, 2, 3,

or
one or more compounds having the structure (A2)

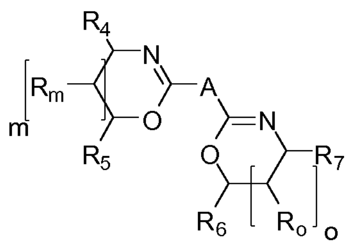

(A2)

where A = alkylene or phenylene,
$R_4$, $R_5$, $R_6$, $R_7$,$R_m$, $R_o$ = hydrogen, alkyl group,
m, o = 0, 1, 2, 3,

or mixtures of one or more compounds having the structure (A1) and (A2),
where the substituents of the type $R_1$, $R_2$, $R_3$, $R_4$, $R_5$, $R_6$, $R_7$, $R_n$, $R_m$ and $R_o$ can be identical or different and substituted or unsubstituted, the structural fragment A can be substituted or unsubstituted and m and o can be identical or different,
with phenolic resins (B),
**characterized in that** the reaction is carried out in an extruder, flow tube, intensive kneader, intensive mixer or static mixer by intensive mixing and quick reaction with introduction of heat and subsequent isolation of the end product, with the residence time of the starting materials in the extruder, flow tube, intensive kneader, intensive mixer or static mixer being from 3 seconds to 15 minutes and the reactants are reacted at temperatures of from

150°C to 200°C, and then rapid cooling is carried out, with the temperature decreasing by more than 50°C within less than 60 seconds.

**2.** Process according to Claim 1, **characterized in that** the residence time of the starting materials in the extruder, flow tube, intensive kneader, intensive mixer or static mixer is from 3 seconds to 5 minutes.

**3.** Process according to at least one of Claims 1 and 2, **characterized in that** the extruder is a twinscrew extruder.

**4.** Process according to at least one of Claims 1 to 3, **characterized in that** a mixture (A) consisting of 100% by weight of compounds having the structure (A2) is used, where m and o are preferably 0 or 1.

**5.** Process according to at least one of Claims 1 to 4, **characterized in that** a mixture (A) comprising compounds having the structure (A2) in which m # o within the same compound (A2u) and/or compounds having the structure (A2) in which m = o within the same compound (A2g) is used.

**6.** Process according to Claim 5, **characterized in that** a mixture (A) comprising both compounds having the structure (A2) in which m and o = 1 within the same compound (A2g6) and compounds having the structure (A2) in which m and o = 0 within the same compound (A2g5) is used.

**7.** Process according to Claim 6, **characterized in that** a mixture (A) comprising

from 30 to 70% by weight of compounds of the structure (A2g6) and
from 70 to 30% by weight of compounds of the structure (A2g5)

is used.

**8.** Process according to at least one of Claims 1 to 7, **characterized in that** derivatives of 2,2,6,6-tetramethylpiperidin-4-one are added as stabilizer.

**9.** Process according to Claim 8, **characterized in that** stabilizers having the following structures

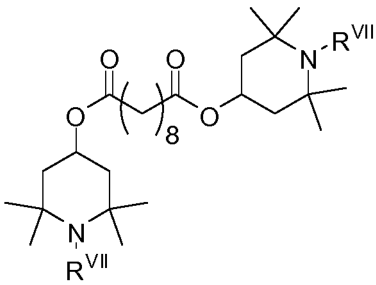

(6)

where $R^{VII}$ = hydrogen, alkyl or alkoxy group,

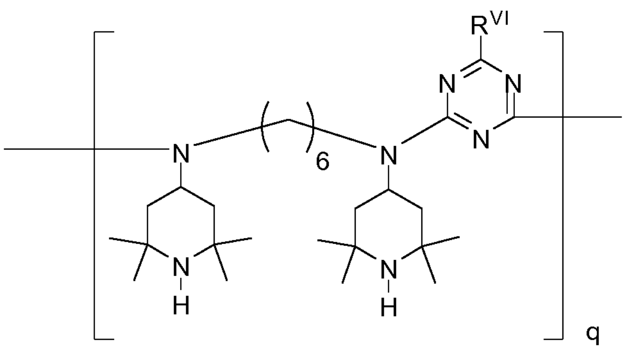

(7)

Where

$R^{VI}$ = 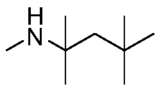, 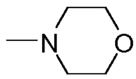 or, 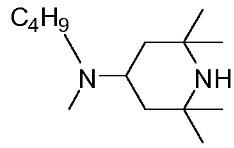

q = 2 to 10, or

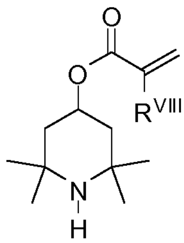

(8)

where $R^{VIII}$ = hydrogen or alkyl group, are used.

**10.** Process according to Claim 8, **characterized in that** at least one polymer-bound HALS is used as stabilizer.

**11.** Process according to at least one of Claims 8 to 10, **characterized in that** the stabilizers are used in an amount of from 0.1 to 2% by weight based on the starting materials mixture (A) and phenolic resin (B).

**12.** Process according to at least one of Claims 1 to 11, **characterized in that** antioxidants having the structure (6)

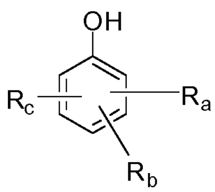

(6)

where $R_a$, $R_b$, $R_c$ = hydrogen, alkyl, alkylaryl or cycloalkyl group, where the substituents of the type $R_a$, $R_b$, $R_c$ can be identical or different and substituted or unsubstituted, are added.

**13.** Process according to Claim 9, **characterized in that** antioxidants having the structure (7),

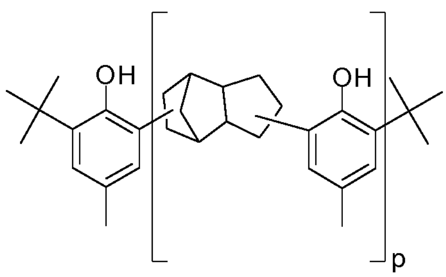

(7)

where p = 1 to 5, are added.

**14.** Process according to at least one of Claims 1 to 13, **characterized in that** at least one deaerator is added to the starting materials mixture (A) and phenolic resin (B).

**15.** Process according to Claim 14, **characterized in that** silicone oils or silicone-modified polyglycols and polyethers,

foam-destroying polysiloxanes or polymers, polyether-modified polymethylalkylsiloxanes are used as deaerators.

**16.** Process according to at least one of Claims 1 to 15, **characterized in that** at least one mould release agent is added to the starting materials mixture (A) and phenolic resin (B).

**Revendications**

**1.** Procédé de fabrication continue de polymères réactifs par réaction, avec des résines phénoliques (B), d'un mélange (A) comprenant un ou plusieurs composés selon la structure (A1)

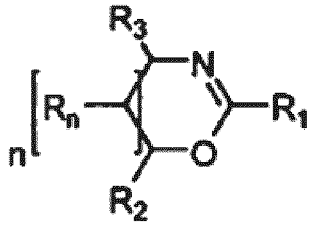

(A1)

dans laquelle $R_1$ = groupe alkyle ou phényle, $R_2$, $R_3$, $R_n$ = atome d'hydrogène, groupe alkyle,
n = 0, 1, 2, 3,
ou
un ou plusieurs composés selon la structure (A2)

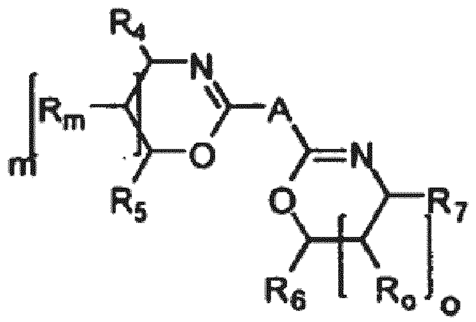

(A2)

dans laquelle A = alkylène ou phénylène, $R_4$, $R_5$, $R_6$, $R_7$, $R_m$, $R_o$ = atome d'hydrogène, groupe alkyle,
m, o = 0, 1, 2, 3,
ou de mélanges d'un ou plusieurs composés selon les structures (A1) et (A2),
les substituants des types $R_1$, $R_2$, $R_3$, $R_4$, $R_5$, $R_6$, $R_7$, $R_n$, $R_1$ et $R_o$ pouvant être identiques ou différents, ainsi que substitués ou non substitués, le fragment de structure A pouvant être substitué ou non substitué, et m et o pouvant être identiques ou différents, **caractérisé en ce que** la réaction a lieu dans une extrudeuse, un tube d'écoulement, un malaxeur intensif, un mélangeur intensif ou un mélangeur statique, par mélange intime intensif et réaction de courte durée avec apport de chaleur, suivie d'un isolement du produit final, le temps de séjour des matières de charge dans l'extrudeuse, le tube d'écoulement, le malaxeur intensif, le mélangeur intensif ou le mélangeur statique étant de 3 secondes à 15 minutes, et les réactifs étant mis à réagir à des températures de 150 à 200°C, puis on procède à un refroidissement rapide, la température diminuant de plus de 50°C en moins de 60 secondes.

**2.** Procédé selon la revendication 1, **caractérisé en ce que** le temps de séjour des matières de charge dans l'extrudeuse, le tube d'écoulement, le malaxeur intensif, le mélangeur intensif ou le mélangeur statique, est de 3 secondes à 5 minutes.

**3.** Procédé selon au moins une des revendications 1 ou 2, **caractérisé en ce que** l'extrudeuse est une extrudeuse à deux vis.

**4.** Procédé selon au moins l'une des revendications 1 à 3, **caractérisé en ce qu'**on utilise un mélange (A) constitué

à raison de 100 % en poids de composés selon la structure (A2), m et o valant de préférence 0 ou 1.

5. Procédé selon au moins l'une des revendications 1 à 4, **caractérisé en ce qu'**on utilise un mélange (A) qui comprend des composés selon la structure (A2) avec m ≠ o à l'intérieur du même composé (A2u) et/ou des composés selon la structure (A2) avec m = o à l'intérieur du même composé (A2g).

6. Procédé selon la revendication 5, **caractérisé en ce qu'**on utilise un mélange (A) qui comprend tant des composés selon la structure (A2) avec m et o = 1 à l'intérieur du même composé (A2g6), que des composés selon la structure (A2) avec m et o = 0 à l'intérieur du même composé (A2g5).

7. Procédé selon la revendication 6, **caractérisé en ce qu'**on utilise un mélange (A), qui comprend 30 à 70 % en poids de composés de structure (A2g6), et 70 à 30 % en poids de composés de structure (A2g5).

8. Procédé selon au moins l'une des revendications 1 à 7, **caractérisé en ce qu'**on ajoute en tant que stabilisant des dérivés de la 2,2,6,6-tétraméthylpipéridin-4-one.

9. Procédé selon la revendication 8, **caractérisé en ce qu'**on utilise des stabilisants selon les structures suivantes

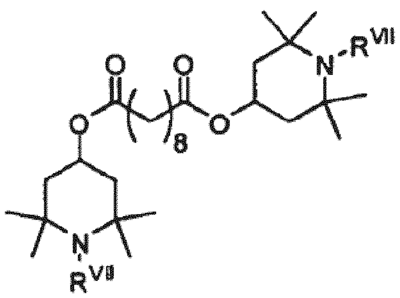

(6)

avec $R^{VII}$ = atome d'hydrogène, groupe alkyle ou alcoxy,

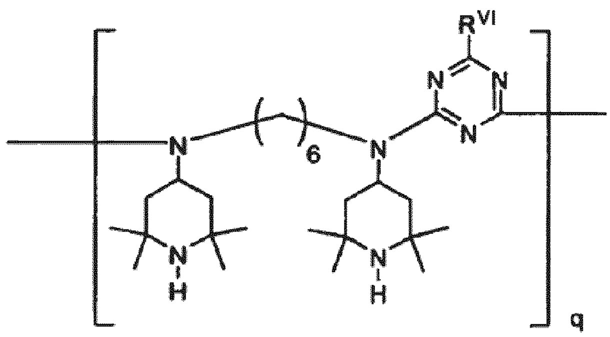

(7)

avec

$R^{VI}$ = 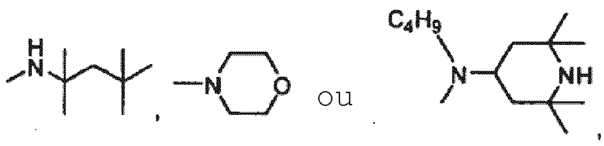

q = 2 à 10, ou

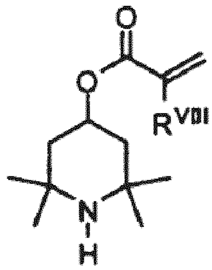

(8)

avec $R^{VIII}$ = atome d'hydrogène ou groupe alkyle.

**10.** Procédé selon la revendication 8, **caractérisé en ce qu'**on utilise en tant que stabilisant un composé HALS lié à un polymère.

**11.** Procédé selon au moins l'une des revendications 8 à 10, **caractérisé en ce qu'**on utilise les stabilisants en une quantité de 0, 1 à 2 % en poids par rapport aux matières de charge mélange (A) et résine phénolique (B).

**12.** Procédé selon au moins l'une des revendications 1 à 11, **caractérisé en ce qu'**on ajoute des antioxydants selon la structure (6)

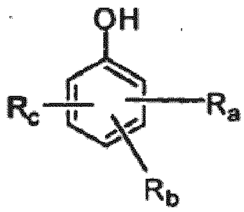

(6)

avec $R_a$, $R_b$, $R_c$ = atome d'hydrogène, groupe alkyle, alkylaryle ou cycloalkyle,
les substituants de type $R_a$, $R_b$, $R_c$ pouvant être identiques ou différents, ainsi que substitués ou non substitués.

**13.** Procédé selon la revendication 9, **caractérisé en ce qu'**on ajoute des antioxydants selon la structure (7)

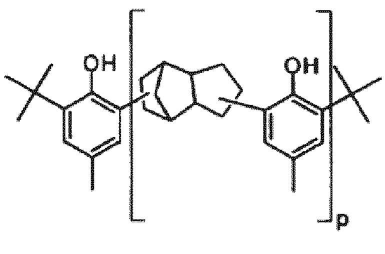

(7)

avec p = 1 à 5.

**14.** Procédé selon au moins l'une des revendications 1 à 13, **caractérisé en ce qu'**on ajoute aux matières de charge mélange (A) et résine phénolique (B) au moins un désaérateur.

**15.** Procédé selon la revendication 14, **caractérisé en ce qu'**on utilise en tant que désaérateur des huiles de silicone ou des polyglycols et des polyéthers modifiés par une silicone, des polysiloxanes ou des polymères destructeurs de mousse, des polyméthylalkylsiloxanes modifiés par un polyéther.

**16.** Procédé selon au moins l'une des revendications 1 à 15, **caractérisé en ce qu'**on ajoute aux matières de charge mélange (A) et résine phénolique (B) au moins un agent de démoulage.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4699970 A, Tiba
- EP 0284880 A2, Goel
- US 5302687 A, Culbertson
- US 4806267 A
- US 5644006 A, Deviney
- EP 0758351 B1
- US 5616659 A
- WO 9805699 A
- EP 0063544 A1


### In der Beschreibung aufgeführte Nicht-Patentliteratur


- **E. A. BOULTER et al.** *Electrical Insulation Conference,* 1997
- *Electrical Manufacturing & Coil Winding Conference Proceedings,* September 1997, vol. 22-25, 249-253
- **IN PROG.** *Polym. Sci.,* 2002, vol. 27, 579-626